# EUROPÄISCHE PATENTSCHRIFT

(11) **EP 2 782 802 B1**
(45) Veröffentlichungstag und Bekanntmachung des Hinweises auf die Patenterteilung: **22.05.2019**
(21) Anmeldenummer: 12788540.8
(22) Anmeldetag: 21.11.2012
(51) Int. Cl.: B60T 11/232, B60T 11/236

(54) **HAUPTZYLINDER**
MASTER CYLINDER
MAÎTRE-CYLINDRE

(30) Priorität: 23.11.2011 DE 102011055645
(43) Veröffentlichungstag der Anmeldung: 01.10.2014
(73) Patentinhaber: Gustav Magenwirth GmbH & Co. KG, 72574 Bad Urach (DE)
(72) Erfinder: FRITSCHLE, Stefan, 72574 Bad Urach (DE); RUOPP, Michael, 89180 Berghülen (DE); NENNING, Bernd, 89335 Ichenhausen (DE)
(74) Vertreter: Hoeger, Stellrecht & Partner Patentanwälte mbB
(86) Internationale Anmeldenummer: PCT/EP2012/073244
(87) Internationale Veröffentlichungsnummer: WO 2013/076146

(56) Entgegenhaltungen:
- DE-A1-102008 063 241
- DE-A1-102011 088 469
- US-A1- 2003 213 240

## Beschreibung

Die vorliegende Erfindung betrifft einen Hauptzylinder, insbesondere für ein Kupplungs-, Betätigungs- oder Bremssystem eines Fahrzeugs, welcher ein Zylindergehäuse mit einer Kolbenbohrung und einer Zylinderkammer, einen in der Kolbenbohrung zwischen einer Betätigungsstellung und einer Druckausgleichstellung verschiebbar angeordneten Kolben und ein zwischen dem Zylindergehäuse und dem Kolben angeordnetes und die Zylinderkammer begrenzendes Hauptdichtelement umfasst. In dem Zylindergehäuse ist mindestens eine Nachlauföffnung vorgesehen, welche einerseits auf einer der Zylinderkammer abgewandten Seite des Hauptdichtelements in einen Zwischenraum zwischen dem Kolben und dem Zylindergehäuse und andererseits in einen Nachlaufraum mündet.

Ein solcher Hauptzylinder ist beispielsweise aus der DE 10 2008 063 241 A1 bekannt. Bei diesem Hauptzylinder ist vorgesehen, dass der Kolben mit einer Nachlaufbohrung versehen ist, durch welche Hydraulikmedium aus dem Nachlaufraum in einen Innenraum des Kolbens strömen kann.

Der vorliegenden Erfindung liegt die Aufgabe zugrunde, einen Hauptzylinder zu schaffen, welcher mit geringem Aufwand herstellbar ist und eine sichere Abdichtung der Zylinderkammer nach außen sowie ein zuverlässiges Nachströmen von Hydraulikmedium in die Zylinderkammer ermöglicht.

Diese Aufgabe wird erfindungsgemäß dadurch gelöst, dass der Kolben einen ersten Abschnitt umfasst, welcher eine zylindrische Mantelfläche aufweist, und dass der Kolben einen zweiten Abschnitt umfasst, welcher mindestens einen gegenüber der zylindrischen Mantelfläche des ersten Abschnitts radial nach innen zurückversetzten Bereich aufweist, wobei der zurückversetzte Bereich sich bis zu einer der Zylinderkammer zugewandten Stirnseite des Kolbens erstreckt und wobei der erste und der zweite Abschnitt so an dem Kolben angeordnet sind, dass in einer Betätigungsstellung des Kolbens das Hauptdichtelement im ersten Abschnitt des Kolbens an demselben dichtend anliegt und in der Druckausgleichstellung des Kolbens im zweiten Abschnitt des Kolbens zwischen dem Kolben und dem Hauptdichtelement mindestens ein Spalt gebildet ist, durch welchen Hydraulikmedium zum Druckausgleich längs des Kolbens aus dem Nachlaufraum in die Zylinderkammer nachlaufen kann.

Dadurch, dass der Kolben zwei Abschnitte umfasst, wobei ein Abschnitt eine zylindrische Mantelfläche und der weitere Abschnitt mindestens einen gegenüber der zylindrischen Mantelfläche des ersten Abschnitts radial nach innen zurückversetzten Bereich aufweist, wobei mindestens ein zurückversetzter Bereich sich bis zu einer der Zylinderkammer zugewandten Stirnseite des Kolbens erstreckt und wobei die beiden Abschnitte so an dem Kolben angeordnet sind, dass in der Betätigungsstellung des Kolbens das Hauptdichtelement im ersten Abschnitt des Kolbens an demselben dichtend anliegt und in der Druckausgleichstellung des Kolbens im zweiten Abschnitt des Kolbens zwischen dem Kolben und dem Hauptdichtelement mindestens ein Spalt gebildet ist, durch welchen Hydraulikmedium zum Druckausgleich längs des Kolbens aus dem Nachlaufraum in die Zylinderkammer nachlaufen kann, ist eine radiale Bohrung in dem Kolben vorzugsweise entbehrlich. Insbesondere kann der Kolben hierdurch aus Kunststoff, insbesondere in einem Spritzgussverfahren, einfach hergestellt werden.

Bei einer Ausgestaltung der Erfindung ist vorgesehen, dass mindestens ein gegenüber der zylindrischen Mantelfläche des ersten Abschnitts radial nach innen zurückversetzter Bereich des zweiten Abschnitts eine zylindrische Mantelfläche aufweist, wobei ein Außendurchmesser des zweiten Abschnitts des Kolbens kleiner ist als ein Außendurchmesser des ersten Abschnitts des Kolbens. Auf diese Weise kann der Kolben fertigungstechnisch besonders einfach hergestellt werden.

Vorteilhaft kann es sein, wenn ein Übergangsabschnitt des Kolbens, welcher zwischen dem ersten Abschnitt und dem zweiten Abschnitt des Kolbens angeordnet ist, einen längs des Kolbens von dem Außendurchmesser des zweiten Abschnitts zu dem Außendurchmesser des ersten Abschnitts ansteigenden Außendurchmesser aufweist. Auf diese Weise kann der Kolben stets besonders schonend an das Hauptdichtelement angelegt werden, ohne dessen Funktion nach vielfacher Betätigung des Hauptzylinders zu beeinträchtigen.

Insbesondere kann vorgesehen sein, dass der Übergangsabschnitt des Kolbens, welcher zwischen dem ersten Abschnitt und dem zweiten Abschnitt des Kolbens angeordnet ist, einen längs des Kolbens von dem Außendurchmesser des zweiten Abschnitts zu dem Außendurchmesser des ersten Abschnitts zumindest näherungsweise kontinuierlich, insbesondere gleichmäßig, ansteigenden Außendurchmesser aufweist. Beispielsweise kann vorgesehen sein, dass der Übergangsabschnitt im Wesentlichen kegelstumpfförmig (kegelig) oder kurvenförmig mit entsprechenden Übergangsradien ausgebildet ist. Auf diese Weise kann ein Verschleiß des Hauptdichtelements minimiert werden.

Bei einer Ausgestaltung der Erfindung ist vorgesehen, dass der Hauptzylinder zur Abdichtung des Zwischenraums zwischen dem Kolben und dem Zylindergehäuse mindestens ein Sicherungsdichtelement umfasst, welches auf einer der Zylinderkammer abgewandten Seite mindestens einer Nachlauföffnung angeordnet ist. Auf diese Weise kann ein unerwünschtes Entweichen von Hydraulikmedium zuverlässig vermieden werden.

Günstig kann es sein, wenn der Hauptzylinder mindestens ein Hauptdichtelement und/oder mindestens ein Sicherungsdichtelement umfasst, welches als O-Ring-Dichtung, als X-Ring-Dichtung, als Lippendichtung oder als Plungerdichtung ausgebildet ist. Auf diese Weise kann eine zuverlässige Abdichtung des Hauptzylinders erfolgen.

Insbesondere kann vorgesehen sein, dass mindestens ein Dichtelement, beispielsweise ein Hauptdichtelement und/oder ein Sicherungselement, in einer Aufnahme in dem Zylindergehäuse und/oder in einer Aufnahme in dem Kolben anordenbar ist.

Vorteilhaft kann es sein, wenn mindestens ein Dichtelement einen ringförmigen Basiskörper aufweist.

Mindestens ein Dichtelement ist vorzugsweise so ausgebildet, dass sich von einem ringförmigen Basiskörper eine radial außenliegende Stützlippe in Richtung der Zylinderkammer erstreckt.

Ferner erfolgt vorzugsweise die Abdichtung gegenüber einer Mantelfläche des Kolbens (Kolbenmantelfläche) dadurch, dass, von dem Basiskörper des Dichtelements ausgehend, eine radial innenliegende Dichtlippe sich in Richtung der Zylinderkammer erstreckt, wobei die Dichtlippe insbesondere in der Betätigungsstellung des Kolbens an der Mantelfläche des Kolbens anliegt.

Zum Erreichen einer guten Abdichtung ist die radial innenliegende Dichtlippe vorzugsweise flexibel ausgebildet.

Vorteilhaft kann es sein, wenn die Dichtlippe so ausgebildet ist, dass sie radial nach innen mit Vorspannung an die Kolbenmantelfläche anlegbar ist.

Vorteilhaft kann es sein, wenn die radial innenliegende Dichtlippe sich unter Druck radial nach innen aufstellt und somit an die Kolbenmantelfläche angepresst wird. Hierdurch kann die Dichtfunktion des Dichtelements optimiert werden.

Bei einer Ausgestaltung der Erfindung ist vorgesehen, dass das Zylindergehäuse mindestens zweiteilig ausgebildet ist, wobei ein Grundkörper des Zylindergehäuses mindestens eine Hülsenbohrung zur Aufnahme mindestens einer Zylinderhülse des Zylindergehäuses aufweist. Auf diese Weise kann das Zylindergehäuse besonders einfach, insbesondere aus verschiedenen Werkstoffen, hergestellt werden. So muss das Zylindergehäuse bei einer derartigen Ausgestaltung nicht zwangsweise an sämtlichen Stellen die hohen Oberflächenansprüche erfüllen, um die notwendigen dynamischen Dichtflächen bereitzustellen. Vielmehr kann es ausreichend sein, wenn die Maßhaltigkeit lediglich im Bereich der Abdichtung des Kolbens und der mindestens einen Zylinderhülse hochwertig ist.

Vorzugsweise stellt die Zylinderhülse ein Optimum in Sachen kunststoffgerechter Gestaltung für ein Spritzgussbauteil mit hoher Maß- und Oberflächengüte dar.

Vorzugsweise umfasst das Zylindergehäuse den Grundkörper und mindestens eine Zylinderhülse.

Mindestens eine Zylinderhülse dient vorzugsweise der Aufnahme und Führung des Kolbens. Hierzu kann vorgesehen sein, dass mindestens eine Zylinderhülse einen Innendurchmesser aufweist, welcher (abzüglich Toleranzen) im Wesentlichen dem Außendurchmesser des Kolbens entspricht.

Alternativ oder ergänzend hierzu kann vorgesehen sein, dass mindestens eine Zylinderhülse zumindest einen Abschnitt einer Wandung der Zylinderkammer bildet. Auf diese Weise kann der Bereich der Zylinderkammer des Zylindergehäuses besonders einfach hergestellt werden. Insbesondere kann hierbei vorgesehen sein, dass eine Anschlussvorrichtung für eine Hydraulikleitung an der Zylinderhülse ausgebildet ist. Eine separate Aufnahmevorrichtung für eine solche Hydraulikleitung ist an dem Grundkörper des Zylindergehäuses dann vorzugsweise entbehrlich.

Mindestens eine Hülsenbohrung ist vorzugsweise an einer Einschubseite des Grundkörpers vorgesehen, von welcher aus der Kolben in das Zylindergehäuse eingeschoben wird.

Alternativ oder ergänzend hierzu ist vorgesehen, dass mindestens eine Hülsenbohrung an einer Druckseite des Zylindergehäuses, an welcher mindestens eine Hydraulikleitung anschließbar ist, angeordnet ist.

Bei einer Ausgestaltung der Erfindung ist vorgesehen, dass an mindestens einer Zylinderhülse mindestens ein Ringkanal, insbesondere mindestens ein Ringkanal für Hydraulikmedium, ausgebildet ist. Auf diese Weise kann eine gleichmäßige Verteilung des Hydraulikmediums erfolgen.

Vorteilhaft kann es sein, wenn mindestens ein Ringkanal auf einer im montierten Zustand des Hauptzylinders dem Grundkörper des Zylindergehäuses zugewandten Außenseite der Zylinderhülse ausgebildet ist.

An mindestens einer Zylinderhülse ist vorzugsweise mindestens ein sich längs einer Betätigungsrichtung (Bewegungsrichtung) des Kolbens erstreckender Mediumkanal ausgebildet. Auf diese Weise kann ein Medium besonders einfach längs der Betätigungsrichtung des Kolbens geführt werden, beispielsweise der Zylinderkammer des Hauptzylinders zugeführt werden.

Insbesondere kann vorgesehen sein, dass mindestens ein Mediumkanal auf einer im montierten Zustand des Hauptzylinders dem Grundkörper des Zylindergehäuses abgewandten Innenseite der Zylinderhülse ausgebildet ist.

Bei einer Ausgestaltung der Erfindung ist vorgesehen, dass mindestens eine Nachlauföffnung in mindestens einer Zylinderhülse vorgesehen ist. Auf diese Weise kann mittels der mindestens einen Zylinderhülse eine Fluidverbindung zwischen einem Nachlaufraum und der Zylinderkammer ermöglicht werden.

Günstig kann es sein, wenn mindestens eine Nachlauföffnung in mindestens einer Zylinderhülse mindestens einen Ringkanal in der mindestens einen Zylinderhülse mit mindestens einem Mediumkanal in der mindestens einen Zylinderhülse verbindet.

Insbesondere kann hierbei vorgesehen sein, dass mindestens eine Zylinderhülse mindestens einen auf einer Außenseite der Zylinderhülse angeordneten Ringkanal und mindestens einen auf einer Innenseite der Zylinderhülse angeordneten Mediumkanal umfasst, wobei vorzugsweise der mindestens eine Mediumkanal mit dem mindestens einen Ringkanal mittels der mindestens einen Nachlauföffnung in Fluidverbindung steht.

Ferner kann vorgesehen sein, dass mindestens eine Nachlauföffnung in mindestens einer Zylinderhülse mindestens einen Ringkanal in der mindestens einen Zylinderhülse mit einem Zwischenraum zwischen dem Kolben und der mindestens einen Zylinderhülse verbindet.

Insbesondere kann vorgesehen sein, dass mehrere, beispielsweise vier, Nachlauföffnungen in einer Zylinderhülse vorgesehen sind, welche sich vorzugsweise zwischen einem Ringkanal und der Innenseite der Zylinderhülse, welcher der Führung des Kolbens dient, erstrecken.

Bei einer Ausgestaltung der Erfindung ist vorgesehen, dass mindestens eine Nachlauföffnung in mindestens einer Zylinderhülse mindestens einen Mediumkanal in der mindestens einen Zylinderhülse und/oder in dem Kolben mit dem Nachlaufraum verbindet. Auf diese Weise kann dem Mediumkanal besonders einfach Medium aus dem Nachlaufraum zugeführt werden.

Vorteilhaft kann es sein, wenn im montierten Zustand des Hauptzylinders zwischen einem der Zylinderkammer zugewandten Ende einer Zylinderhülse, welche der Aufnahme und Führung des Kolbens dient, und einem der Zylinderkammer zugewandten Ende der Hülsenbohrung eine Aufnahme für ein Dichtelement, insbesondere für das Hauptdichtelement des Hauptzylinders, vorgesehen ist. Auf diese Weise kann das Dichtelement, insbesondere das Hauptdichtelement des Hauptzylinders, besonders einfach und sicher in dem Zylindergehäuse aufgenommen werden. Insbesondere kann hierdurch ein unerwünschtes Verrutschen des Dichtelements innerhalb des Zylindergehäuses wirksam verhindert werden.

Vorteilhaft kann es sein, wenn im montierten Zustand des Hauptzylinders zwischen einem dem Kolben zugewandten Ende einer Zylinderhülse, welche zumindest einen Abschnitt einer Wandung der Zylinderkammer bildet, und einem dem Kolben zugewandten Ende der Hülsenbohrung eine Aufnahme für ein Dichtelement, insbesondere für das Hauptdichtelement des Hauptzylinders, vorgesehen ist. Auch hierdurch kann eine sichere Aufnahme des Dichtelements, insbesondere des Hauptdichtelements des Hauptzylinders, in dem Zylindergehäuse ermöglicht werden.

Bei einer Ausgestaltung der Erfindung ist vorgesehen, dass im montierten Zustand des Hauptzylinders zwischen einem dem Kolben zugewandten Ende der Zylinderhülse, welche zumindest einen Abschnitt einer Wandung der Zylinderkammer bildet, und einem der Zylinderkammer zugewandten Ende einer Zylinderhülse, welche der Aufnahme und Führung des Kolbens dient, eine Aufnahme für ein Dichtelement, insbesondere für das Hauptdichtelement des Hauptzylinders, vorgesehen ist. In diesem Fall erfolgt die Aufnahme des Dichtelements, insbesondere des Hauptdichtelements des Hauptzylinders, vorzugsweise zwischen zwei Zylinderhülsen. Die zur Aufnahme der beiden Zylinderhülsen in dem Grundkörper des Zylindergehäuses vorgesehenen Hülsenbohrungen sind vorzugsweise durch eine durch den Grundkörper durchgehende Hülsenbohrung gebildet, so dass eine einfache Herstellung des Grundkörpers des Zylindergehäuses möglich ist.

Vorteilhaft kann es sein, wenn in dem Zylindergehäuse und/oder in dem Kolben mindestens ein Mediumkanal gebildet ist, durch welchen zumindest in der Druckausgleichstellung des Kolbens Hydraulikmedium von dem dem Kolben zugewandten Ende mindestens einer Nachlauföffnung zu dem Hauptdichtelement fließen kann. Insbesondere kann vorgesehen sein, dass in einer Zylinderhülse des Zylindergehäuses mindestens ein Mediumkanal gebildet ist, durch welchen zumindest in der Druckausgleichstellung des Kolbens Hydraulikmedium von dem dem Kolben zugewandten Ende mindestens einer Nachlauföffnung zu dem Hauptdichtelement fließen kann.

Vorteilhaft kann es sein, wenn der Kolben zumindest teilweise oder zumindest abschnittsweise aus einem Kunststoffmaterial gebildet ist. Insbesondere kann vorgesehen sein, dass der Kolben in einem Spritzgussverfahren hergestellt ist.

Zumindest ein Teil des Zylindergehäuses ist vorzugsweise aus einem thermoplastischen Material gebildet. Insbesondere kann vorgesehen sein, dass der Grundkörper und/oder mindestens eine Zylinderhülse aus einem thermoplastischen Material gebildet sind.

Der Kolben ist vorzugsweise mindestens zweiteilig ausgebildet.

Insbesondere kann vorgesehen sein, dass der Kolben mindestens zwei bezüglich einer Betätigungsrichtung des Kolbens relativ zu dem Zylindergehäuse hintereinander angeordnete Bauteile umfasst.

Mindestens zwei Bauteile des Kolbens sind vorzugsweise kraftschlüssig, formschlüssig und/oder stoffschlüssig miteinander verbunden. Insbesondere kann vorgesehen sein, dass mindestens zwei Bauteile des Kolbens miteinander verrastbar oder verrastet sind.

Der vorliegenden Erfindung liegt die weitere Aufgabe zugrunde, einen Hauptzylinder der eingangs genannten Art mit optional einem oder mehreren der vorstehend genannten Merkmale bereitzustellen, bei welchem eine einfache und zuverlässige Abdichtung der Zylinderkammer nach außen hin möglich ist.

Diese Aufgabe wird erfindungsgemäß dadurch gelöst, dass mindestens ein Dichtelement vorzugsweise stoffschlüssig mit einem Trägerelement für das Dichtelement verbunden ist.

Vorteilhaft kann es sein, wenn das Trägerelement der Kolben ist.

Ferner kann vorgesehen sein, dass das Trägerelement das Zylindergehäuse, insbesondere eine Zylinderhülse des Zylindergehäuses, ist.

Günstig kann es sein, wenn das Trägerelement ein Zusatzelement ist, welches kraftschlüssig, formschlüssig und/oder stoffschlüssig mit dem Kolben und/oder mit dem Zylindergehäuse, insbesondere mit mindestens einer Zylinderhülse des Zylindergehäuses, verbindbar oder verbunden ist.

Das Dichtelement ist dann vorzugsweise ein mindestens zweiteiliges Dichtelement, welches das eigentliche Dichtelement, beispielsweise ein aus einem elastischen, insbesondere elastomeren, Material gebildetes Dichtelement, und das Trägerelement umfasst.

Das Trägerelement ist vorzugsweise zusammen mit dem Dichtelement mittels einer Rastverbindung mit dem Kolben und/oder mit dem Zylindergehäuse, insbesondere mit mindestens einer Zylinderhülse des Zylindergehäuses, verbindbar oder verbunden.

Vorteilhaft kann es sein, wenn das Dichtelement auf das Trägerelement aufvulkanisiert ist.

Als ein solches Dichtelement kann insbesondere ein Sicherungsdichtelement und/oder ein Hauptdichtelement vorgesehen sein.

Bei einer Ausgestaltung der Erfindung ist vorgesehen, dass der Kolben und/oder das Zylindergehäuse, insbesondere mindestens eine Zylinderhülse des Zylindergehäuses, mit mindestens einer Aufnahmevorrichtung zur Aufnahme des Dichtelements und/oder des Trägerelements versehen ist.

Insbesondere kann vorgesehen sein, dass der Kolben und/oder das Zylindergehäuse, insbesondere mindestens eine Zylinderhülse des Zylindergehäuses, mit mindestens einer Rastvorrichtung zur Verrastung des Dichtelements und/oder des Trägerelements an dem Kolben bzw. an dem Zylindergehäuse, insbesondere an der mindestens einen Zylinderhülse des Zylindergehäuses, versehen ist.

Insbesondere kann vorgesehen sein, dass das Dichtelement als ein O-Ring ausgebildet ist, welcher mittels des Trägerelements auf den Kolben aufgeklipst werden kann.

Der Kolben ist insbesondere ein gestufter Geberkolben.

Weitere Merkmale und/oder Vorteile der Erfindung sind Gegenstand der nachfolgenden Beschreibung und der zeichnerischen Darstellung von Ausführungsbeispielen .

In den Zeichnungen zeigen:
- Fig. 1: einen schematischen Längsschnitt durch ein erstes Ausführungsbeispiel eines Hauptzylinders in der Druckausgleichstellung;
- Fig. 2: eine vergrößerte Darstellung des Bereichs I in Fig. 1;
- Fig. 3: eine vergrößerte Darstellung des Bereichs II in Fig. 1;
- Fig. 4: eine der Fig. 3 entsprechende schematische Darstellung des Hauptzylinders, wobei der Kolben in einer Betätigungsstellung angeordnet ist;
- Fig. 5: einen schematischen Querschnitt durch den Hauptzylinder aus Fig. 1 längs der Linie 5-5 in Fig. 3;
- Fig. 6: eine schematische perspektivische Darstellung des Kolbens des Hauptzylinders aus Fig. 1;
- Fig. 7: eine schematische perspektivische Darstellung eines Kolbens einer zweiten Ausführungsform eines Hauptzylinders, bei welchem mehrere radial nach innen zurückversetzte Bereiche auf der Außenseite des Kolbens vorgesehen sind;
- Fig. 8: einen schematischen Längsschnitt durch einen Kolben einer dritten Ausführungsform eines Hauptzylinders, wobei der Kolben zweiteilig ausgebildet ist und mit einem aufgeklipsten Dichtelement versehen ist;
- Fig. 9: eine der Fig. 8 entsprechende Darstellung eines Kolbens einer vierten Ausführungsform eines Hauptzylinders, wobei ein Dichtelement auf den Kolben aufvulkanisiert ist;
- Fig. 10: eine der Fig. 1 entsprechende Darstellung einer fünften Ausführungsform eines Hauptzylinders, bei welcher eine Zylinderhülse für den Kolben und eine Zylinderhülse für die Zylinderkammer vorgesehen sind; und
- Fig. 11: eine der Fig. 1 entsprechende Darstellung einer sechsten Ausführungsform eines Hauptzylinders, bei welcher anstelle einer Zylinderhülse für den Kolben eine Zylinderhülse für die Zylinderkammer vorgesehen ist.

Gleiche oder funktional äquivalente Elemente sind in sämtlichen Figuren mit denselben Bezugszeichen versehen.

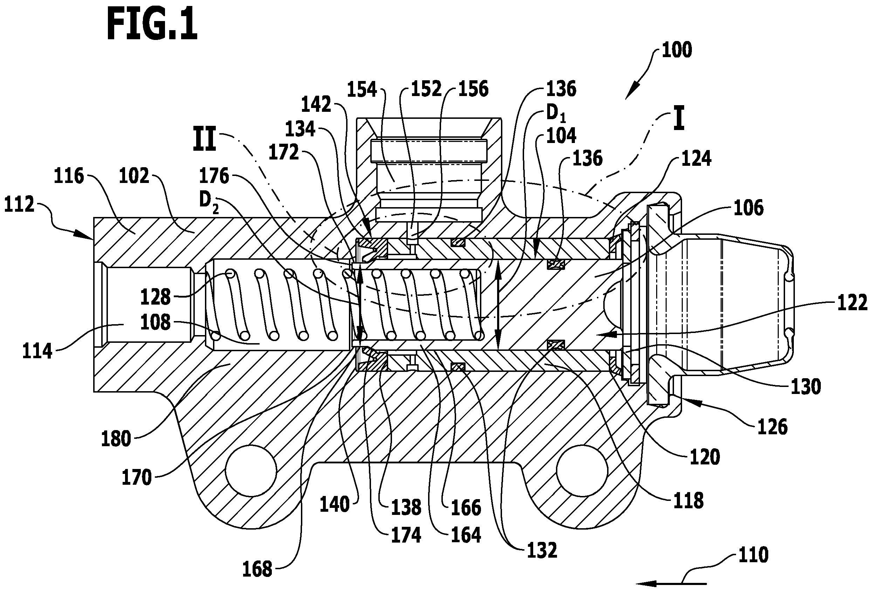

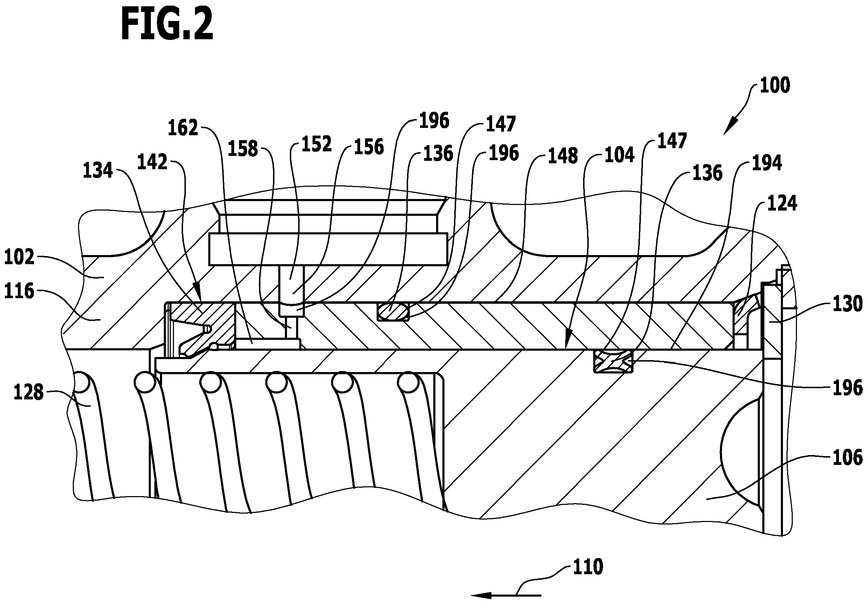

Eine in den Fig. 1 bis 6 dargestellte erste Ausführungsform eines als Ganzes mit 100 bezeichneten Hauptzylinders, insbesondere eines Hauptzylinders für ein Kraftfahrzeug mit geregeltem Bremssystem, umfasst ein als Ganzes mit 102 bezeichnetes Zylindergehäuse, in welchem eine als Ganzes mit 104 bezeichnete Kolbenbohrung vorgesehen ist.

In der Kolbenbohrung 104 ist ein insgesamt mit 106 bezeichneter, beispielsweise aus KU-Spritzguss hergestellter, Kolben angeordnet, wobei der Kolben 106 in einer von dem Kolben 106 und der Kolbenbohrung 104 begrenzten Zylinderkammer 108 ein in der Zylinderkammer 108 angeordnetes Hydraulikmedium durch eine Bewegung des Kolbens 106 in einer Betätigungsrichtung 110 (Bewegungsrichtung) unter Druck setzen kann.

In dem Zylindergehäuse 102 ist auf einer der Kolbenbohrung 104 abgewandten Seite des Zylindergehäuses 102, welche eine Hydraulikseite 112 des Zylindergehäuses 102 darstellt, ein Hydraulikanschluss 114 vorgesehen.

An diesem Hydraulikanschluss 114 kann eine (nicht dargestellte) Hydraulikleitung angeschlossen werden, um das mittels des Kolbens 106 in der Zylinderkammer 108 unter Druck gesetzte Hydraulikmedium beispielsweise einem (nicht dargestellten) Kupplungs- oder Bremssystem zuzuführen und dieses hierdurch mit Druck zu beaufschlagen.

Bei der in den Fig. 1 bis 6 dargestellten ersten Ausführungsform des Hauptzylinders 100 ist das Zylindergehäuse 102 im Wesentlichen zweiteilig ausgebildet und umfasst einen Grundkörper 116 und eine Zylinderhülse 118.

Der Grundkörper 116 ist beispielsweise aus Metall oder aus Kunststoff, insbesondere aus einem thermoplastischen Material, gebildet.

Die Zylinderhülse 118 ist vorzugsweise aus einem Kunststoff, insbesondere aus einem thermoplastischen Material, gebildet.

Zur Aufnahme der Zylinderhülse 118 umfasst der Grundkörper 116 eine Hülsenbohrung 120, welche koaxial zu der Kolbenbohrung 104 des Zylindergehäuses 102 verläuft und lediglich einen größeren Durchmesser aufweist als die Kolbenbohrung 104.

Die Hülsenbohrung 120 dient der Aufnahme der Zylinderhülse 118, welche hohlzylinderförmig ausgebildet ist.

Ein Innenraum 122 der Zylinderhülse 118 bildet bei der in den Fig. 1 bis 6 dargestellten ersten Ausführungsform des Hauptzylinders 100 die eigentliche Kolbenbohrung 104 zur Aufnahme und Führung des Kolbens 106.

Der Innendurchmesser der Zylinderhülse 118 entspricht somit im Wesentlichen dem Außendurchmesser des Kolbens 106, so dass der Kolben 106 im Wesentlichen spielfrei in der Zylinderhülse 118 führbar ist und ein Zwischenraum 194 zwischen dem Kolben 106 und dem Zylindergehäuse 102 minimiert ist.

Die Zylinderhülse 118 ist beispielsweise mittels eines Zackenrings 124 in der Hülsenbohrung 120 arretiert und somit insbesondere in der Betätigungsrichtung 110 des Kolbens 106 festgelegt.

Ausgehend von einer der Hydraulikseite 112 gegenüberliegenden Einschubseite 126 des Zylindergehäuses 102 kann der Kolben 106 des Hauptzylinders 100 in der Betätigungsrichtung 110 bewegt werden, um das Hydraulikmedium in der Zylinderkammer 108 unter Druck zu setzen.

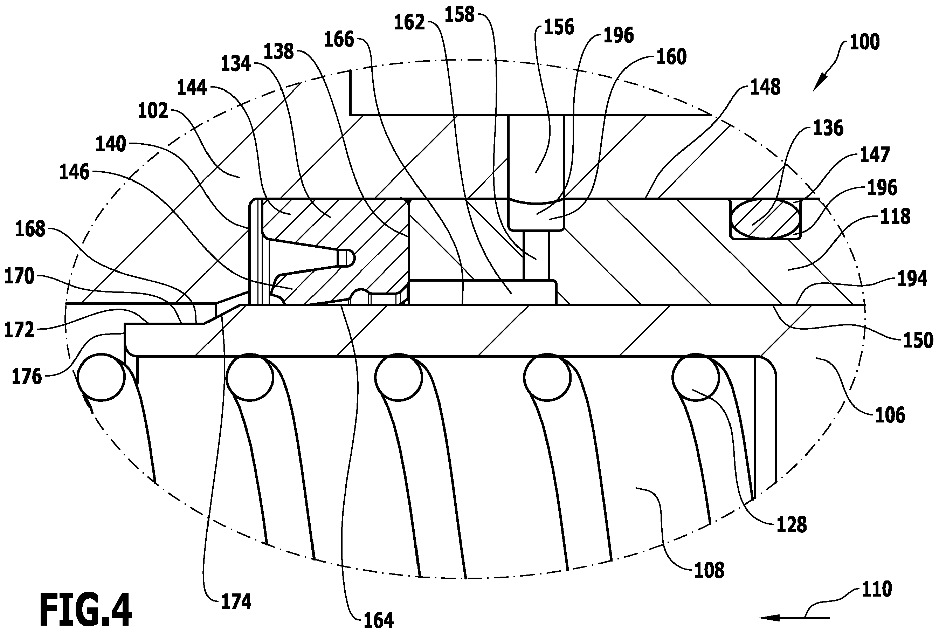

Mittels einer Druckfeder 128, welche in der Zylinderkammer 108 angeordnet ist, kann der Kolben 106 nach einer Betätigung desselben aus der durch die Betätigung resultierenden Betätigungsstellung (siehe Fig. 4) zurück in die in Fig. 1 dargestellte Druckausgleichstellung gebracht werden.

Ein Anschlagelement 130, welches auf der Einschubseite 126 des Zylindergehäuses 102 angeordnet ist, sichert den Kolben 106 gegen ein unerwünschtes Herausschieben entgegen der Betätigungsrichtung 110.

Zur Abdichtung der Zylinderkammer 108 sind mehrere Dichtelemente 132 vorgesehen, insbesondere ein Hauptdichtelement 134 und zwei Sicherungsdichtelemente 136.

Bei der in den Fig. 1 bis 6 dargestellten ersten Ausführungsform des Hauptzylinders 100 ist das Hauptdichtelement 134 zur Abdichtung der Zylinderkammer 108 zwischen einem der Zylinderkammer 108 zugewandten vorderen Ende 138 der Zylinderhülse 118 und einem das Ende der Hülsenbohrung 120 bildenden Vorsprung 140 des Grundkörpers 116 des Zylindergehäuses 102 angeordnet.

Mittels des Vorsprungs 140 und der Zylinderhülse 118 ist somit bei der in den Fig. 1 bis 6 dargestellten ersten Ausführungsform des Hauptzylinders 100 eine Aufnahme 142 zur Aufnahme des Hauptdichtelements 134 gebildet.

Das Hauptdichtelement 134 umfasst einen im Wesentlichen ringförmigen Basiskörper 144, mit welchem das Hauptdichtelement 134 an dem Grundkörper 116 des Zylindergehäuses 102 anliegt, und eine ebenfalls ringförmige, sich radial nach innen und in der Betätigungsrichtung 110 erstreckende Dichtlippe 146.

Die Dichtlippe 146 des Hauptdichtelements 134 liegt insbesondere in der Betätigungsstellung (siehe Fig. 4) des Hauptzylinders 100 an dem Kolben 106 an und dichtet somit die Zylinderkammer 108 gegenüber der Umgebung des Hauptzylinders 100 ab.

Das Hauptdichtelement 134 ist somit vorzugsweise als eine sogenannte Lippendichtung ausgebildet.

Mittels des Hauptdichtelements 134 ist somit eine Abdichtung zwischen dem Grundkörper 116 und dem Kolben 106 möglich.

Die Sicherungsdichtelemente 136 hingegen dichten nicht zwischen dem Grundkörper 116 und dem Kolben 106, sondern zwischen dem Grundkörper 116 und der Zylinderhülse 118 bzw. zwischen der Zylinderhülse 118 und dem Kolben 106 ab.

So ist eines der Sicherungsdichtelemente 136 beispielsweise in einer ringförmigen Ausnehmung 147, welche durch eine umlaufende Nut 196 gebildet ist, auf einer Außenseite 148 der Zylinderhülse 118 vorgesehen. Ein solches Sicherungsdichtelement 136 ist insbesondere als eine O-Ring-Dichtung oder als eine X-Ring-Dichtung ausgebildet.

Das Sicherungsdichtelement 136 zur Abdichtung zwischen der Zylinderhülse 118 und dem Kolben 106 ist beispielsweise in einer ringförmigen Ausnehmung 147 (umlaufende Nut 196) in dem Kolben 106 angeordnet und kann ebenfalls als eine O-Ring-Dichtung oder als eine X-Ring-Dichtung ausgebildet sein.

Bei einer nicht dargestellten Ausführungsform des Hauptzylinders 100 kann vorgesehen sein, dass das Sicherungsdichtelement 136 zwischen der Zylinderhülse 118 und dem Kolben 106 in einer ringförmigen Ausnehmung auf einer Innenseite 150 der Zylinderhülse 118 angeordnet ist.

Zur Versorgung der Zylinderkammer 108 mit Hydraulikmedium ist in dem Zylindergehäuse 102 eine Nachlauföffnung 152 vorgesehen, welche einen Nachlaufraum 154 in der Druckausgleichstellung des Kolbens 106 mit der Zylinderkammer 108 verbindet, so dass Hydraulikmedium aus dem Nachlaufraum 154 in die Zylinderkammer 108 nachströmen kann.

Die Nachlauföffnung 152 ist bei der in den Fig. 1 bis 6 dargestellten ersten Ausführungsform des Hauptzylinders 100 durch eine Nachlauföffnung 156 in dem Grundkörper 116 und mehrere Nachlauföffnungen 158, beispielsweise vier Nachlauföffnungen 158, in der Zylinderhülse 118 gebildet.

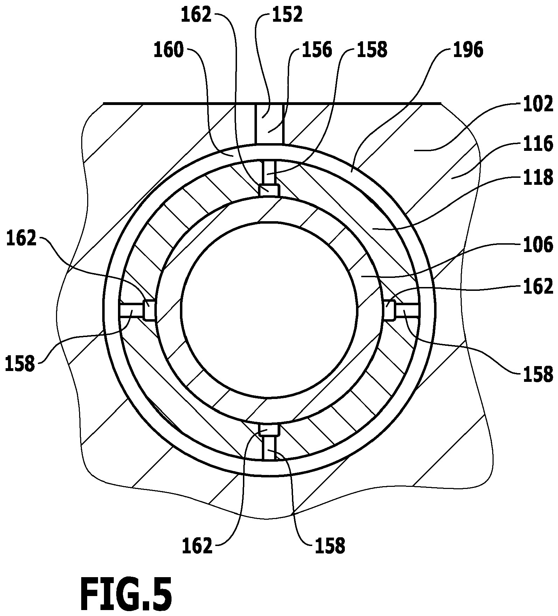

Wie insbesondere Fig. 5 zu entnehmen ist, steht die Nachlauföffnung 156 in dem Grundkörper 116 mit sämtlichen Nachlauföffnungen 158 in der Zylinderhülse 118 mittels eines auf der Außenseite 148 der Zylinderhülse 118 ausgebildeten ringförmigen Ringkanals 160 in Fluidverbindung. Der Ringkanal 160 ist insbesondere durch eine umlaufende Nut 196 gebildet.

Auf der Innenseite 150 der Zylinderhülse 118 sind vier Mediumkanäle 162 vorgesehen, welche sich ausgehend von den Nachlauföffnungen 158 in der Betätigungsrichtung 110 des Kolbens 106 bis zu dem vorderen Ende 138 der Zylinderhülse 118 erstrecken.

Die Mediumkanäle 162 sind als separate Ausnehmungen oder insbesondere als eine ringförmige Ausnehmung (nicht dargestellt) auf der Innenseite 150 der Zylinderhülse 118 ausgebildet und ermöglichen eine insbesondere gleichmäßige Zuführung von Hydraulikmedium aus dem Nachlaufraum 154 zu dem Hauptdichtelement 134 auf der der Zylinderkammer 108 abgewandten Seite des Hauptdichtelements 134.

Um Hydraulikmedium auch an dem Hauptdichtelement 134 vorbeizuführen und somit der Zylinderkammer 108 des Hauptzylinders 100 zuführen zu können, ist der Kolben 106 bei der in den Fig. 1 bis 6 dargestellten ersten Ausführungsform des Hauptzylinders 100 mit zwei verschiedenen Abschnitten versehen, wobei ein erster Abschnitt 164 eine zylindrische Mantelfläche 166 aufweist und ein zweiter Abschnitt 168 mindestens einen gegenüber der zylindrischen Mantelfläche 166 des ersten Abschnitts 164 radial nach innen zurückversetzten Bereich 170 aufweist.

Bei der in den Fig. 1 bis 6 dargestellten ersten Ausführungsform des Hauptzylinders 100 ist ein einziger zurückversetzter Bereich 170 des zweiten Abschnitts 168 vorgesehen, welcher eine zylindrische Mantelfläche 172 umfasst, wobei der Durchmesser D₂ der zylindrischen Mantelfläche 172 des zweiten Abschnitts 168 kleiner ist als der Durchmesser D₁ der zylindrischen Mantelfläche 166 des ersten Abschnitts 164.

Zwischen dem ersten Abschnitt 164 und dem zweiten Abschnitt 168 ist ein Übergangsabschnitt 174 vorgesehen, dessen Oberfläche im Wesentlichen derjenigen eines Konus entspricht, so dass ein kontinuierlicher Übergang zwischen dem ersten Abschnitt 164 und dem zweiten Abschnitt 168 des Kolbens 106 gewährleistet ist.

Der zurückversetzte Bereich 170 des zweiten Abschnitts 168 erstreckt sich ausgehend von einer Stirnseite 176 des Kolbens 106 bis zu dem Übergangsabschnitt 174.

Der Außendurchmesser D₂ des zweiten Abschnitts 168 (der Durchmesser der zylindrischen Mantelfläche 172 des zweiten Abschnitts 168) ist vorzugsweise kleiner als ein Innendurchmesser des Hauptdichtelements 134 in der Druckausgleichstellung des Hauptzylinders 100, so dass in der Druckausgleichstellung des Hauptzylinders 100, wenn der Kolben 106 so angeordnet ist, dass die Dichtlippe 146 des Hauptdichtelements 134 benachbart zu dem zweiten Abschnitt 168 angeordnet ist, ein Spalt 178 zwischen dem zweiten Abschnitt 168 und dem Hauptdichtelement 134 gebildet ist.

Die Dichtlippe 146 des Hauptdichtelements 134 verläuft vorzugsweise schräg zu der Betätigungsrichtung 110 derart, dass zwischen dem Übergangsabschnitt 174 des Kolbens 106 und der dem Kolben 106 zugewandten Seite der Dichtlippe 146 ein Spalt 178 mit im Wesentlichen konstantem Querschnitt gebildet ist.

Durch den Spalt 178 zwischen dem Hauptdichtelement 134 und dem Kolben 106 kann in der Druckausgleichstellung des Hauptzylinders 100 Hydraulikmedium in die Zylinderkammer 108 nachströmen.

Bei der in den Fig. 1 bis 6 dargestellten ersten Ausführungsform des Hauptzylinders 100 ist das Zylindergehäuse 102 zweiteilig ausgebildet und umfasst den Grundkörper 116 und die Zylinderhülse 118.

Die Zylinderhülse 118 dient der Führung des Kolbens 106. Die Zylinderkammer 108 ist in dem Grundkörper 116 ausgebildet, so dass eine Wandung 180 der Zylinderkammer 108 durch den Grundkörper 116 gebildet ist.

Auch der Hydraulikanschluss 114 ist direkt in dem Grundkörper 116 ausgebildet.

Die vorstehend beschriebene erste Ausführungsform des Hauptzylinders 100 funktioniert wie folgt:
Der Hauptzylinder 100 liegt zunächst in der in Fig. 1 dargestellten Druckausgleichstellung vor, in welcher der Kolben 106 nicht mit einer Kraft beaufschlagt wird.

Aufgrund der Federwirkung der Druckfeder 128 ist der Kolben 106 in einer maximal entgegen der Betätigungsrichtung 110 bewegten Stellung angeordnet. Der Kolben 106 liegt dabei an dem Anschlagelement 130 an.

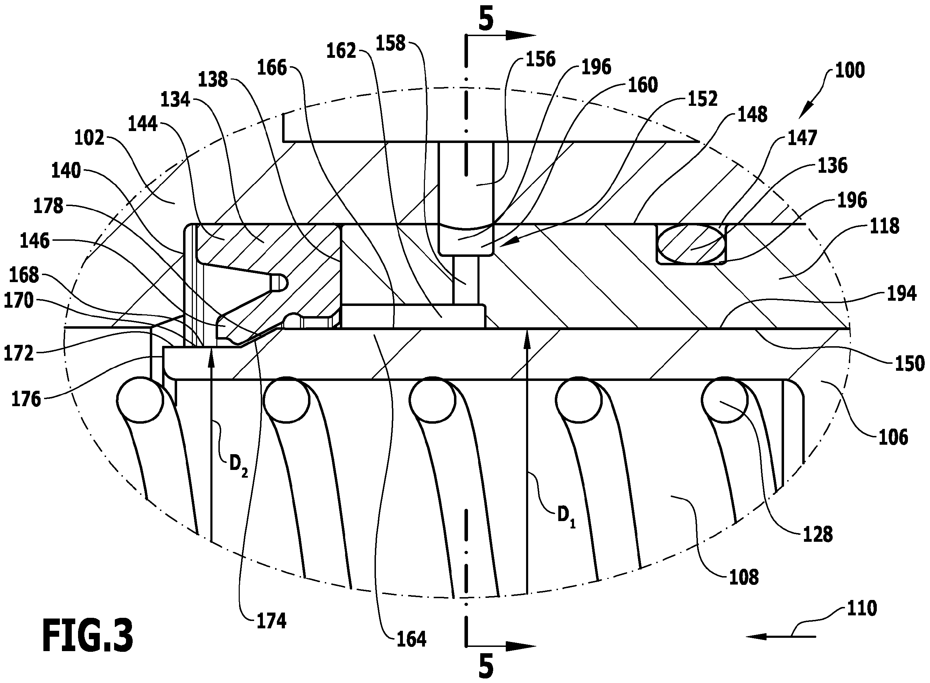

Wie insbesondere Fig. 3 zu entnehmen ist, kann in dieser Stellung Hydraulikmedium aus dem Nachlaufraum 154 durch die Nachlauföffnung 156 in dem Grundkörper 116 des Zylindergehäuses 102 dem Ringkanal 160 in der Zylinderhülse 118 zugeführt werden.

Mittels des Ringkanals 160 wird das Hydraulikmedium dann in der Umfangsrichtung der Zylinderhülse 118 gleichmäßig verteilt und über die Nachlauföffnungen 158 in der Zylinderhülse 118 den Mediumkanälen 162 zugeführt.

Die Mediumkanäle 162 grenzen an das Hauptdichtelement 134 an, welches in der Druckausgleichstellung von dem Kolben 106 beabstandet ist, so dass der Spalt 178 gebildet ist.

Durch den Spalt 178 kann das Hydraulikmedium somit an dem Hauptdichtelement 134 vorbeigeführt und der Zylinderkammer 108 zugeführt werden.

Wird nun der Kolben 106 in der Betätigungsrichtung 110 bewegt, so wird das Volumen der Zylinderkammer 108 reduziert und somit ein Druck in der Zylinderkammer 108 aufgebaut.

Aufgrund der Bewegung des Kolbens 106 in der Betätigungsrichtung 110 gelangt der Kolben 106 in eine Betätigungsstellung (siehe Fig. 4), in welcher das Hauptdichtelement 134 an der zylindrischen Mantelfläche 166 des ersten Abschnitts 164 des Kolbens 106 dichtend anliegt.

Aufgrund der Ausgestaltung des Hauptdichtelements 134 als Lippendichtung führt der in der Zylinderkammer 108 erzeugte Druck dazu, dass die Dichtlippe 146 des Hauptdichtelements 134 an den ersten Abschnitt 164 des Kolbens 106 angepresst wird und hierdurch eine Dichtwirkung verstärkt wird.

Ein Entweichen des Hydraulikmediums aus der Zylinderkammer 108 ist in der Betätigungsstellung des Kolbens 106 nur noch durch eine (nicht dargestellte) Hydraulikleitung möglich, welche an dem Hydraulikanschluss 114 des Hauptzylinders 100 anschließbar ist und mittels welcher beispielsweise einem Kupplungssystem oder einem Bremssystem das unter Druck stehende Hydraulikmedium zuführbar ist, um eine Kupplung oder eine Bremse zu betätigen.

Wenn keine Kraft auf den Kolben 106 zur Bewegung desselben in der Betätigungsrichtung 110 wirkt, wird der Kolben 106 durch die Wirkung der Druckfeder 128 entgegen der Betätigungsrichtung 110 bewegt, bis der Kolben 106 in der in Fig. 1 dargestellten Druckausgleichstellung angeordnet ist.

In dieser Stellung kann der Zylinderkammer 108 erneut Hydraulikmedium zugeführt werden, um eine gleichbleibende Menge an Hydraulikmedium in der Zylinderkammer 108 und somit eine zuverlässige Betätigung des Kupplungs- oder Bremssystems zu gewährleisten.

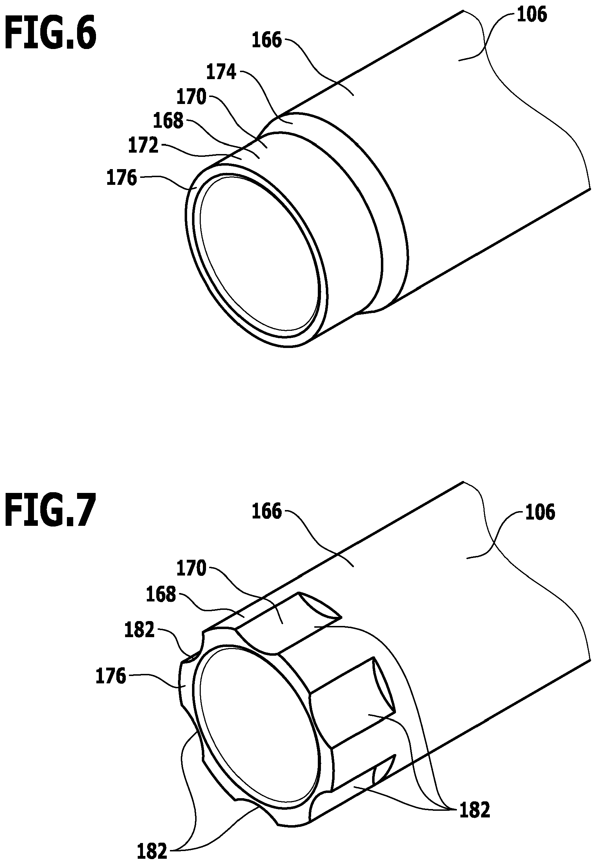

Eine in Fig. 7 dargestellte zweite Ausführungsform eines Hauptzylinders 100 unterscheidet sich von der in den Fig. 1 bis 6 dargestellten ersten Ausführungsform im Wesentlichen dadurch, dass der Kolben 106 einen zweiten Abschnitt 168 aufweist, welcher nicht mit einer zylindrischen Mantelfläche, sondern mit mehreren, beispielsweise sechs, Ausnehmungen 182 versehen ist, mittels welchen mehrere, beispielsweise sechs, Spalte 178 gebildet sind, um Hydraulikmedium an dem Hauptdichtelement 134 vorbei der Zylinderkammer 108 zuführen zu können.

Die Ausnehmungen 182 bilden dabei radial zurückversetzte Bereiche 170 des zweiten Abschnitts 168.

Im Übrigen stimmt die in Fig. 7 dargestellte zweite Ausführungsform des Hauptzylinders 100 hinsichtlich Aufbau und Funktion mit der in den Fig. 1 bis 6 dargestellten ersten Ausführungsform überein, so dass auf deren vorstehende Beschreibung insoweit Bezug genommen wird.

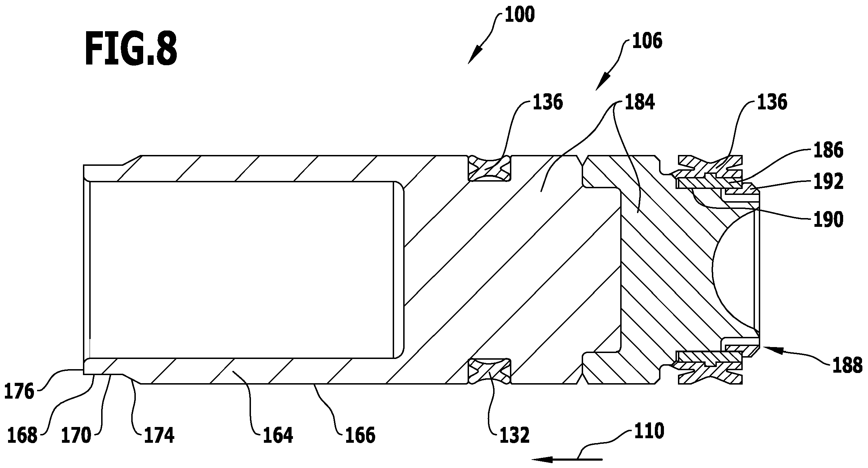

Eine in Fig. 8 dargestellte dritte Ausführungsform eines Hauptzylinders 100 unterscheidet sich von der in den Fig. 1 bis 6 dargestellten ersten Ausführungsform im Wesentlichen dadurch, dass der Kolben 106 nicht einteilig, sondern zweiteilig ausgebildet ist, wobei zwei bezüglich der Betätigungsrichtung 110 hintereinander angeordnete Bauteile 184 des Kolbens 106 vorgesehen sind, welche beispielsweise miteinander verrastet oder stoffschlüssig miteinander verbunden sind.

Ferner ist bei der in Fig. 8 dargestellten dritten Ausführungsform des Hauptzylinders 100 ein Sicherungsdichtelement 136 zur Abdichtung des Kolbens 106 gegenüber der Zylinderhülse 118 ebenfalls zweiteilig ausgebildet.

Das Sicherungsdichtelement 136 umfasst dabei das eigentliche Dichtelement aus elastischem, insbesondere elastomerem, Material und ein Trägerelement 186, welches beispielsweise ringförmig ausgebildet ist und mittels einer Rastvorrichtung 188 an dem Kolben 106 festlegbar ist.

Der Kolben 106 umfasst eine Aufnahme 190, auf welche das Trägerelement 186 aufschiebbar ist. Ferner umfasst der Kolben 106 mindestens eine Rastnase 192, mittels welcher das Trägerelement 186 gegen ein unerwünschtes Verschieben längs der Betätigungsrichtung 110 des Kolbens 106 sicherbar ist.

Das die eigentliche Dichtung bildende elastische Material ist vorzugsweise auf das Trägerelement 186 aufvulkanisiert. Auf diese Weise kann eine Kombination aus einem Trägerelement 186 und einem Dichtelement 132 besonders einfach hergestellt werden.

Im Übrigen stimmt die in Fig. 8 dargestellte dritte Ausführungsform eines Hauptzylinders 100 hinsichtlich Aufbau und Funktion mit der in den Fig. 1 bis 6 dargestellten ersten Ausführungsform überein, so dass auf deren vorstehende Beschreibung insoweit Bezug genommen wird.

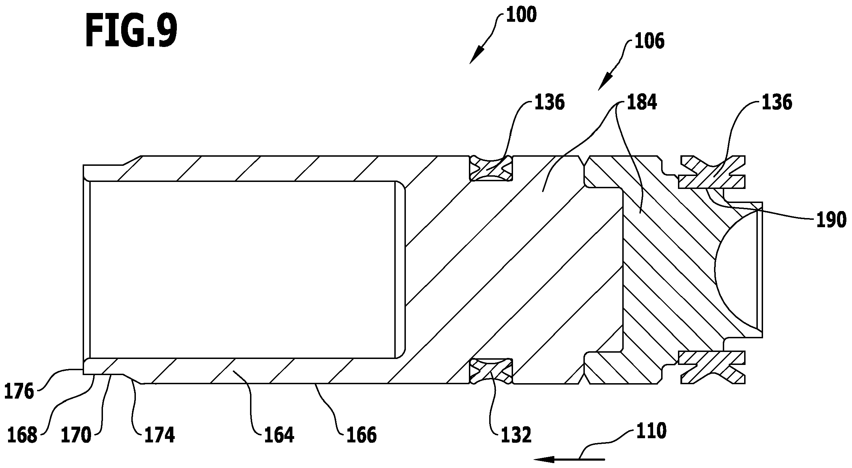

Eine in Fig. 9 dargestellte vierte Ausführungsform eines Hauptzylinders 100 unterscheidet sich von der in Fig. 8 dargestellten dritten Ausführungsform im Wesentlichen dadurch, dass kein separates Trägerelement 186 zur Aufnahme eines abdichtenden, elastischen Materials vorgesehen ist.

Ferner ist bei der in Fig. 9 dargestellten Ausführungsform des Hauptzylinders 100 keine Rastvorrichtung 188 an dem Kolben 106 vorgesehen.

Vielmehr ist das Dichtelement 132, insbesondere das Sicherungsdichtelement 136, bei der in Fig. 9 dargestellten vierten Ausführungsform des Hauptzylinders 100 direkt auf den Kolben 106 aufvulkanisiert, so dass der Kolben 106 das Trägerelement 186 bildet.

Im Übrigen stimmt die in Fig. 9 dargestellte vierte Ausführungsform des Hauptzylinders 100 hinsichtlich Aufbau und Funktion mit der in Fig. 8 dargestellten dritten Ausführungsform überein, so dass auf deren vorstehende Beschreibung insoweit Bezug genommen wird.

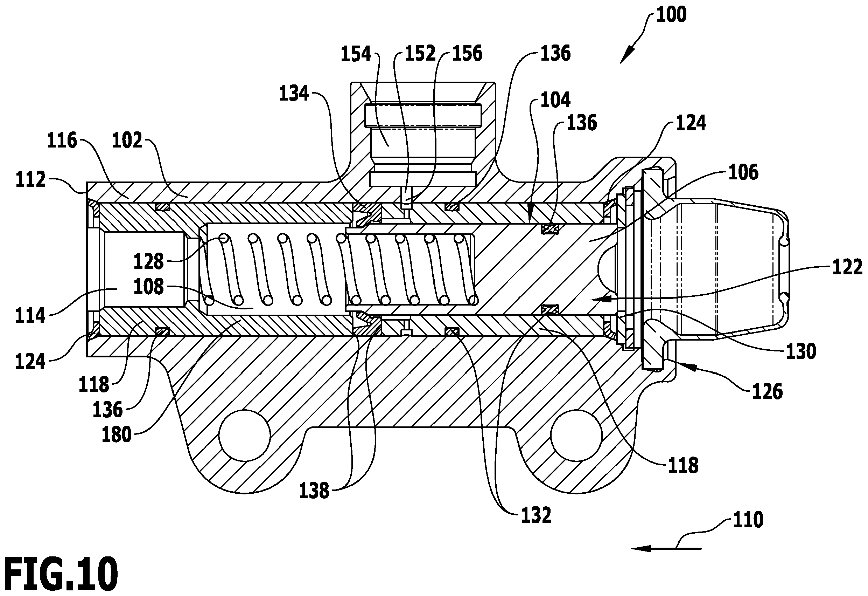

Eine in Fig. 10 dargestellte fünfte Ausführungsform eines Hauptzylinders 100 unterscheidet sich von der in den Fig. 1 bis 6 dargestellten ersten Ausführungsform im Wesentlichen dadurch, dass das Zylindergehäuse 102 dreiteilig ausgebildet ist und einen Grundkörper 116 und zwei Zylinderhülsen 118 umfasst.

Eine der Zylinderhülsen 118 dient dabei entsprechend der in den Fig. 1 bis 6 dargestellten ersten Ausführungsform der Aufnahme und Führung des Kolbens 106.

Die weitere Zylinderhülse 118 ist im Bereich der Zylinderkammer 108 angeordnet und bildet die Wandung 180 der Zylinderkammer 108 sowie vorzugsweise auch den Hydraulikanschluss 114 des Zylindergehäuses 102.

Die Hülsenbohrung 120 ist vorzugsweise eine von der Hydraulikseite 112 des Zylindergehäuses 102 bis zu der Einschubseite 126 des Zylindergehäuses 102 durchgehende Bohrung mit einheitlichem Innendurchmesser.

Dadurch, dass bei der in Fig. 10 dargestellten fünften Ausführungsform des Hauptzylinders 100 auch die Wandung 180 der Zylinderkammer 108 durch eine Zylinderhülse 118 gebildet ist, kann insbesondere der Grundkörper 116 des Zylindergehäuses 102 besonders einfach hergestellt werden.

Das Hauptdichtelement 134 ist bei der in Fig. 10 dargestellten fünften Ausführungsform des Hauptzylinders 100 zwischen den einander zugewandten Enden 138 der Zylinderhülsen 118 angeordnet. Die beiden Zylinderhülsen 118 sind hierzu beabstandet voneinander angeordnet, so dass die Aufnahme 142 gebildet ist.

Im Übrigen stimmt die in Fig. 10 dargestellte fünfte Ausführungsform des Hauptzylinders 100 hinsichtlich Aufbau und Funktion mit der in den Fig. 1 bis 6 dargestellten ersten Ausführungsform überein, so dass auf deren vorstehende Beschreibung insoweit Bezug genommen wird.

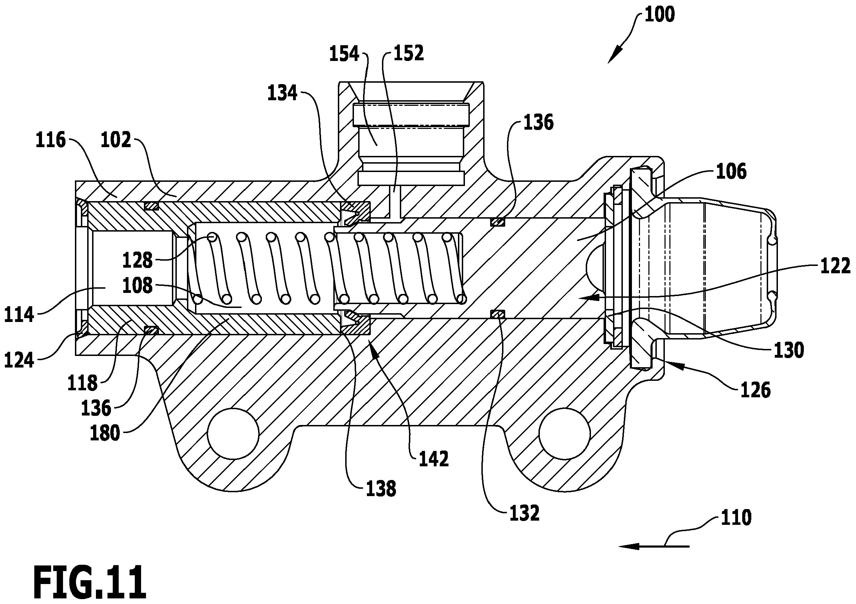

Eine in Fig. 11 dargestellte sechste Ausführungsform eines Hauptzylinders 100 unterscheidet sich von der in Fig. 10 dargestellten fünften Ausführungsform im Wesentlichen dadurch, dass lediglich eine Zylinderhülse 118 vorgesehen ist, wobei diese die Wandung 180 der Zylinderkammer 108 bildet. Der Kolben 106 ist bei der in Fig. 11 dargestellten sechsten Ausführungsform des Hauptzylinders 100 ohne eine Zylinderhülse 118 in dem Grundkörper 116 des Zylindergehäuses 102 aufgenommen.

Die Mediumkanäle 162 sind dabei insbesondere in dem Kolben 106 ausgebildet, um ein zuverlässiges Nachströmen von Hydraulikmedium in die Zylinderkammer 108 zu ermöglichen.

Im Übrigen stimmt die in Fig. 11 dargestellte sechste Ausführungsform des Hauptzylinders 100 hinsichtlich Aufbau und Funktion mit der in Fig. 10 dargestellten fünften Ausführungsform überein, so dass auf deren vorstehende Beschreibung insoweit Bezug genommen wird.

Die Verwendung von unterschiedlichen Abschnitten 164, 168 des Kolbens 106, um Hydraulikmedium an dem Hauptdichtelement 134 vorbei der Zylinderkammer 108 zuführen zu können, ermöglicht die Ausbildung eines Kolbens 106 ohne durchgängige Nachlaufbohrungen. Hierdurch kann der Kolben 106 einfach hergestellt werden, ohne Nachteile bei der Nachführung von Hydraulikmedium in die Zylinderkammer 108 befürchten zu müssen.

## Patentansprüche

1. Hauptzylinder (100), insbesondere für ein Kupplungs-, Betätigungs- oder Bremssystem eines Fahrzeugs, umfassend ein Zylindergehäuse (102) mit einer Kolbenbohrung (104) und einer Zylinderkammer (108), einen in der Kolbenbohrung (104) zwischen einer Betätigungsstellung und einer Druckausgleichstellung verschiebbar angeordneten Kolben (106) und ein zwischen dem Zylindergehäuse (102) und dem Kolben (106) angeordnetes und die Zylinderkammer (108) begrenzendes Hauptdichtelement (134), wobei in dem Zylindergehäuse (102) mindestens eine Nachlauföffnung (152) vorgesehen ist, die einerseits auf einer der Zylinderkammer (108) abgewandten Seite des Hauptdichtelements (134) in einen Zwischenraum (194) zwischen dem Kolben (106) und dem Zylindergehäuse (102) und andererseits in einen Nachlaufraum (154) mündet,
**dadurch gekennzeichnet, dass** der Kolben (106)einen ersten Abschnitt (164) umfasst, welcher eine zylindrische Mantelfläche (166) aufweist, und dass der Kolben (106) einen zweiten Abschnitt (168) umfasst, welcher mindestens einen gegenüber der zylindrischen Mantelfläche (166) des ersten Abschnitts (164) radial nach innen zurückversetzten Bereich (170) aufweist, wobei der mindestens eine zurückversetzte Bereich (170) sich bis zu einer der Zylinderkammer (108) zugewandten Stirnseite (176) des Kolbens (106) erstreckt und wobei der erste und der zweite Abschnitt (164, 168) so an dem Kolben (106) angeordnet sind, dass in einer Betätigungsstellung des Kolbens (106) das Hauptdichtelement (134) im ersten Abschnitt (164) des Kolbens (106) an demselben dichtend anliegt und in der Druckausgleichstellung des Kolbens (106) im zweiten Abschnitt (168) des Kolbens (106) zwischen dem Kolben (106) und dem Hauptdichtelement (134) mindestens ein Spalt (178) gebildet ist, durch welchen Hydraulikmedium zum Druckausgleich längs des Kolbens (106) aus dem Nachlaufraum (154) in die Zylinderkammer (108) nachlaufen kann.

2. Hauptzylinder (100) nach Anspruch 1, **dadurch gekennzeichnet, dass** mindestens ein gegenüber der zylindrischen Mantelfläche (166) des ersten Abschnitts (164) radial nach innen zurückversetzter Bereich (170) des zweiten Abschnitts (168) eine zylindrische Mantelfläche (172) aufweist, wobei ein Außendurchmesser (D₂) des zweiten Abschnitts (168) des Kolbens (106) kleiner ist als ein Außendurchmesser (D₁) des ersten Abschnitts (164) des Kolbens (106).

3. Hauptzylinder (100) nach Anspruch 2, **dadurch gekennzeichnet, dass** ein Übergangsabschnitt (174) des Kolbens (106), welcher zwischen dem ersten Abschnitt (164) und dem zweiten Abschnitt (168) des Kolbens (106) angeordnet ist, einen längs des Kolbens (106) von dem Außendurchmesser (D₂) des zweiten Abschnitts (168) zu dem Außendurchmesser (D₁) des ersten Abschnitts (164) ansteigenden Außendurchmesser aufweist.

4. Hauptzylinder (100) nach einem der Ansprüche 1 bis 3, **dadurch gekennzeichnet, dass** der Hauptzylinder (100) zur Abdichtung des Zwischenraums (194) zwischen dem Kolben (106) und dem Zylindergehäuse (102) mindestens ein Sicherungsdichtelement (136) umfasst, welches auf einer der Zylinderkammer (108) abgewandten Seite mindestens einer Nachlauföffnung (152) angeordnet ist.

5. Hauptzylinder (100) nach einem der Ansprüche 1 bis 4, **dadurch gekennzeichnet, dass** das Zylindergehäuse (102) mindestens zweiteilig ausgebildet ist, wobei ein Grundkörper (116) des Zylindergehäuses (102) mindestens eine Hülsenbohrung (120) zur Aufnahme mindestens einer Zylinderhülse (118) des Zylindergehäuses (102) aufweist und dass mindestens eine Zylinderhülse (118) der Aufnahme und Führung des Kolbens (106) dient.

6. Hauptzylinder (100) nach Anspruch 5, **dadurch gekennzeichnet, dass** an mindestens einer Zylinderhülse (118) mindestens ein Ringkanal (160) ausgebildet ist.

7. Hauptzylinder (100) nach Anspruch 6, **dadurch gekennzeichnet, dass** mindestens ein Ringkanal (160) auf einer im montierten Zustand des Hauptzylinders (100) dem Grundkörper (116) des Zylindergehäuses (102) zugewandten Außenseite der Zylinderhülse (118) ausgebildet ist.

8. Hauptzylinder (100) nach einem der Ansprüche 5 bis 7, **dadurch gekennzeichnet, dass** an mindestens einer Zylinderhülse (118) mindestens ein sich längs einer Betätigungsrichtung (110) des Kolbens (106) erstreckender Mediumkanal (162) ausgebildet ist.

9. Hauptzylinder (100) nach einem der Ansprüche 5 bis 8, **dadurch gekennzeichnet, dass** mindestens eine Nachlauföffnung (158) in mindestens einer Zylinderhülse (118) vorgesehen ist.

10. Hauptzylinder (100) nach einem der Ansprüche 5 bis 9, **dadurch gekennzeichnet, dass** im montierten Zustand des Hauptzylinders (100) zwischen einem der Zylinderkammer (108) zugewandten Ende (138) einer Zylinderhülse (118), welche der Aufnahme und Führung des Kolbens (106) dient, und einem der Zylinderkammer (108) zugewandten Ende der Hülsenbohrung (120) eine Aufnahme (142) für ein Dichtelement (132) vorgesehen ist.

11. Hauptzylinder (100) nach einem der Ansprüche 5 bis 10, **dadurch gekennzeichnet, dass** im montierten Zustand des Hauptzylinders (100) zwischen einem dem Kolben (106) zugewandten Ende einer Zylinderhülse (118), welche zumindest einen Abschnitt einer Wandung (180) der Zylinderkammer (108) bildet, und einem der Zylinderkammer (108) zugewandten Ende (138) einer Zylinderhülse (118), welche der Aufnahme und Führung des Kolbens (106) dient, eine Aufnahme (142) für ein Dichtelement (132) vorgesehen ist.

12. Hauptzylinder (100) nach einem der Ansprüche 1 bis 11, **dadurch gekennzeichnet, dass** in dem Zylindergehäuse (102) und/oder in dem Kolben (106) mindestens ein Mediumkanal gebildet ist, durch welchen zumindest in der Druckausgleichstellung des Kolbens (106) Hydraulikmedium von dem dem Kolben (106) zugewandten Ende mindestens einer Nachlauföffnung (152) zu dem Hauptdichtelement (134) fließen kann.

13. Hauptzylinder (100) nach einem der Ansprüche 1 bis 12, **dadurch gekennzeichnet, dass** der Kolben (106) zumindest teilweise oder zumindest abschnittsweise aus einem Kunststoffmaterial gebildet ist.

14. Hauptzylinder (100) nach einem der Ansprüche 1 bis 13, **dadurch gekennzeichnet, dass** zumindest ein Teil des Zylindergehäuses (102) aus einem thermoplastischen Material gebildet ist.

15. Hauptzylinder (100) nach einem der Ansprüche 1 bis 14, **dadurch gekennzeichnet, dass** der Kolben (106) mindestens zweiteilig ausgebildet ist.

## Claims

1. Master cylinder (100), in particular for a clutch system, an actuating system or a braking system of a vehicle, comprising a cylinder housing (102) with a piston bore (104) and a cylinder chamber (108), a piston (106) arranged displaceably in the piston bore (104) between an actuating position and a pressure equalisation position, and a main sealing element (134) arranged between the cylinder housing (102) and the piston (106) and delimiting the cylinder chamber (108), wherein at least one supply opening (152) is provided in the cylinder housing (102), which supply opening opens on a side of the main sealing element (134) facing away from the cylinder chamber (108) into an intermediate space (194) between the piston (106) and the cylinder housing (102) on one side and into a supply chamber (154) on the other side,
**characterised in that** the piston (106) comprises a first section (164) which has a cylindrical lateral surface (166) and **in that** the piston (106) comprises a second section (168) which has at least one region (170) which is set back radially inwardly with respect to the cylindrical lateral surface (166) of the first section (164), wherein the at least one set-back region (170) extends to an end (176) of the piston (106) facing toward the cylinder chamber (108) and wherein the first and second sections (164, 168) are arranged on the piston (106) in such a way that in an actuating position of the piston (106), the main sealing element (134) in the first section (164) of the piston (106) abuts in sealing manner thereagainst and in the pressure equalisation position of the piston (106), in the second section (168) of the piston (106) between the piston (106) and the main sealing element (134), at least one gap (178) is formed, through which hydraulic medium can flow along the piston (106) from the supply chamber (154) into the cylinder chamber (108) in order to equalise the pressure.

2. Master cylinder (100) according to claim 1, **characterised in that** at least one region (170) of the second section (168) which is set back radially inwardly relative to the cylindrical lateral surface (166) of the first section (164) has a cylindrical lateral surface (172), wherein an external diameter (D₂) of the second section (168) of the piston (106) is smaller than an external diameter (D₁) of the first section (164) of the piston (106).

3. Master cylinder (100) according to claim 2, **characterised in that** a transition section (174) of the piston (106), which is arranged between the first section (164) and the second section (168) of the piston (106), has an external diameter which increases along the piston (106) from the external diameter (D₂) of the second section (168) to the external diameter (D₁) of the first section (164).

4. Master cylinder (100) according to one of the claims 1 to 3, **characterised in that** the master cylinder (100) comprises at least one back up sealing element (136) for sealing the intermediate space (194) between the piston (106) and the cylinder housing (102), said back up sealing element being arranged on a side of at least one supply opening (152) facing away from the cylinder chamber (108).

5. Master cylinder (100) according to one of the claims 1 to 4, **characterised in that** the cylinder housing (102) is formed in at least two parts, wherein a base member (116) of the cylinder housing (102) has at least one sleeve bore (120) in order to receive at least one cylinder sleeve (118) of the cylinder housing (102)and **in that** at least one cylinder sleeve (118) serves to accommodate and guide the piston (106).

6. Master cylinder (100) according to claim 5, **characterised in that** at least one annular channel (160) is formed on at least one cylinder sleeve (118).

7. Master cylinder (100) according to claim 6, **characterised in that** at least one annular channel (160) is formed on an external side of the cylinder sleeve (118) facing, in the assembled state of the master cylinder (100), toward the base member (116) of the cylinder housing (102).

8. Master cylinder (100) according to one of the claims 5 to 7, **characterised in that** at least one medium channel (162) extending along an actuating direction (110) of the piston (106) is formed on at least one cylinder sleeve (118).

9. Master cylinder (100) according to one of the claims 5 to 8, **characterised in that** at least one supply opening (158) is provided in at least one cylinder sleeve (118).

10. Master cylinder (100) according to one of the claims 5 to 9, **characterised in that**, in the assembled state of the master cylinder (100), a seating (142) for a sealing element (132) is provided between an end (138) of a cylinder sleeve (118) which faces toward the cylinder chamber (108) and serves to accommodate and guide the piston (106) and an end of the sleeve bore (120) facing toward the cylinder chamber (108).

11. Master cylinder (100) according to one of the claims 5 to 10, **characterised in that**, in the assembled state of the master cylinder (100), a seating (142) for a sealing element (132) is provided between an end of a cylinder sleeve (118) which faces toward the piston (106) and forms at least one section of a wall (180) of the cylinder chamber (108) and an end (138) of a cylinder sleeve (118) which faces toward the cylinder chamber (108) and serves to accommodate and guide the piston (106).

12. Master cylinder (100) according to one of the claims 1 to 11, **characterised in that** a medium channel is formed in the cylinder housing (102) and/or in the piston (106), through which at least in the pressure equalisation position of the piston (106), hydraulic medium can flow from the end of at least one supply opening (152) facing toward the piston (106) to the main sealing element (134).

13. Master cylinder (100) according to one of the claims 1 to 12, **characterised in that** the piston (106) is formed at least partially or at least in sections of a plastics material.

14. Master cylinder (100) according to one of the claims 1 to 13, **characterised in that** at least a part of the cylinder housing (102) is made of a thermoplastic material.

15. Master cylinder (100) according to one of the claims 1 to 14, **characterised in that** the piston (106) is made in at least two parts.

## Revendications

1. Maître-cylindre (100), en particulier pour un système d'embrayage, d'actionnement ou de freinage d'un véhicule, comprenant un carter de cylindre (102) avec un alésage pour piston (104) et une chambre de cylindre (108), un piston (106) disposé de manière à pouvoir être coulissé dans l'alésage pour piston (104) entre une position d'actionnement et une position de compensation de pression, et un élément d'étanchéité principal (134) disposé entre le carter de cylindre (102) et le piston (106) et délimitant la chambre de cylindre (108), dans lequel est prévue, dans le carter de cylindre (102), au moins une ouverture de recherche d'équilibre (152), qui débouche d'une part sur un côté, opposé à la chambre de cylindre (108), de l'élément d'étanchéité principal (134) dans un espace intermédiaire (194) entre le piston (106) et le carter de cylindre (102) et d'autre part dans un espace de recherche d'équilibre (154),
**caractérisé en ce que** le piston (106) comprend un premier tronçon (164), lequel présente une surface extérieure cylindrique (166), et que le piston (106) comprend un deuxième tronçon (168), lequel présente au moins une zone (170) en retrait radialement vers l'intérieur par rapport à la surface extérieure cylindrique (166) du premier tronçon (164), dans lequel l'au moins une zone (170) en retrait s'étend jusqu'à un côté frontal (176), tourné vers la chambre de cylindre (108), du piston (106) et dans lequel le premier et le deuxième tronçon (164, 168) sont disposés de telle sorte au niveau du piston (106) que dans une position d'actionnement du piston (106), l'élément d'étanchéité principal (134) repose, dans le premier tronçon (164) du piston (106), au niveau de ce dernier de manière étanche et qu'est formée, dans la position de compensation de pression du piston (106), dans le deuxième tronçon (168) du piston (106), entre le piston (106) et l'élément d'étanchéité principal (134), au moins une fente (178), par laquelle du milieu hydraulique peut suivre aux fins de la compensation de pression le long du piston (106) depuis l'espace de recherche d'équilibre (154) dans la chambre de cylindre (108).

2. Maître-cylindre (100) selon la revendication 1, **caractérisé en ce qu'**au moins une zone (170), en retrait radialement vers l'intérieur par rapport à la surface extérieure cylindrique (166) du premier tronçon (164), du deuxième tronçon (168) présente une surface extérieure cylindrique (172), dans lequel un diamètre extérieur (D₂) du deuxième tronçon (168) du piston (106) est inférieur à un diamètre extérieur (D₁) du premier tronçon (164) du piston (106).

3. Maître-cylindre (100) selon la revendication 2, **caractérisé en ce qu'**un tronçon de transition (174) du piston (106), lequel est disposé entre le premier tronçon (164) et le deuxième tronçon (168) du piston (106), présente un diamètre extérieur augmentant le long du piston (106) depuis le diamètre extérieur (D₂) du deuxième tronçon (168) vers le diamètre extérieur (D₁) du premier tronçon (164).

4. Maître-cylindre (100) selon l'une quelconque des revendications 1 à 3, **caractérisé en ce que** le maître-cylindre (100) comprend, aux fins de l'étanchéification de l'espace intermédiaire (194) entre le piston (106) et le carter de cylindre (102), au moins un élément d'étanchéité de sécurité (136), lequel est disposé sur un côté, opposé à la chambre de cylindre (108), d'au moins une ouverture de recherche d'équilibre (152).

5. Maître-cylindre (100) selon l'une quelconque des revendications 1 à 4, **caractérisé en ce que** le carter de cylindre (102) est réalisé au moins en deux parties, dans lequel un corps de base (116) du carter de cylindre (102) présente au moins un alésage pour manchon (120) servant à recevoir au moins un manchon de cylindre (118) du carter de cylindre (102), et qu'au moins un manchon de cylindre (118) sert au logement et au guidage du piston (106).

6. Maître-cylindre (100) selon la revendication 5, **caractérisé en ce qu'**au moins un canal annulaire (160) est réalisé au niveau d'au moins un manchon de cylindre (118).

7. Maître-cylindre (100) selon la revendication 6, **caractérisé en ce qu'**au moins un canal annulaire (160) est réalisé sur un côté extérieur, tourné dans l'état monté du maître-cylindre (100) vers le corps de base (116) du carter de cylindre (102), du manchon de cylindre (118).

8. Maître-cylindre (100) selon l'une quelconque des revendications 5 à 7, **caractérisé en ce qu'**au moins un canal de milieu (162) s'étendant le long d'une direction d'actionnement (110) du piston (106) est réalisé au niveau d'au moins un manchon de cylindre (118).

9. Maître-cylindre (100) selon l'une quelconque des revendications 5 à 8, **caractérisé en ce qu'**au moins une ouverture de recherche d'équilibre (158) est prévue dans au moins un manchon de cylindre (118).

10. Maître-cylindre (100) selon l'une quelconque des revendications 5 à 9, **caractérisé en ce que** dans l'état monté du maître-cylindre (100) entre une extrémité (138), tournée vers la chambre de cylindre (108), d'un manchon de cylindre (118), lequel sert à loger et à guider le piston (106), et une extrémité, tournée vers la chambre de cylindre (108), de l'alésage pour manchon (120), un logement (142) est prévu pour un élément d'étanchéité (132).

11. Maître-cylindre (100) selon l'une quelconque des revendications 5 à 10, **caractérisé en ce que** dans l'état monté du maître-cylindre (100) entre une extrémité, tournée vers le piston (106), d'un manchon de cylindre (118), lequel forme un tronçon d'une paroi (180) de la chambre de cylindre (108), et une extrémité (138), tournée vers la chambre de cylindre (108), d'un manchon de cylindre (118), qui sert au logement et au guidage du piston (106), un logement (142) est prévu pour un élément d'étanchéité (132).

12. Maître-cylindre (100) selon l'une quelconque des revendications 1 à 11, **caractérisé en ce que** dans le carter de cylindre (102) et/ou dans le piston (106), au moins un canal de milieu est formé, par lequel un milieu hydraulique peut s'écouler depuis l'extrémité, tournée vers le piston (106), d'au moins une ouverture de recherche d'équilibre (152) vers l'élément d'étanchéité principal (134) au moins dans la position de compensation de pression du piston (106).

13. Maître-cylindre (100) selon l'une quelconque des revendications 1 à 12, **caractérisé en ce que** le piston (106) est formé au moins en partie ou au moins par endroits à partir d'un matériau en matière plastique.

14. Maître-cylindre (100) selon l'une quelconque des revendications 1 à 13, **caractérisé en ce qu'**au moins une partie du carter de cylindre (102) est formé à partir d'un matériau thermoplastique.

15. Maître-cylindre (100) selon l'une quelconque des revendications 1 à 14, **caractérisé en ce que** le piston (106) est réalisé au moins en deux parties.
